# EUROPEAN PATENT APPLICATION

(11) **EP 4 234 286 A1**
(43) Date of publication of application: **30.08.2023**
(21) Application number: 23156907.0
(22) Date of filing: 15.02.2023
(51) Int. Cl.: B60H 1/00, B64D 13/06

(54) **VEHICLE CABIN AIR TEMPERATURE CONTROL USING A PULSE WIDTH MODULATED THREE-WAY SOLENOID VALVE**

(30) Priority: 24.02.2022 US 202263313507 P; 09.03.2022 US 202217690116
(71) Applicant: Hamilton Sundstrand Corporation, Charlotte, NC 28217-4578 (US)
(72) Inventor: MUGURUSA, Diego S., North Haven, 06473 (US); HIMMELMANN, Ashley, Hartford, CT, 06103 (US)
(74) Representative: Dehns

(57) **Abstract**

A vehicle cabin air temperature controller includes a two-position three-way solenoid valve (220) with one inlet to take in coolant from a pump, a first outlet (222) to supply a cooling leg (245), and a second outlet (223) to supply a bypass leg (225). The vehicle cabin air temperature controller also includes a controller (210) to control flow of the coolant via the first outlet (222) and the second outlet (223) of the solenoid valve, and a cabin air heat exchanger (260) to obtain an input coolant based on the control of the flow via the first outlet (222) and the second outlet (223) and to provide cooled cabin air to the vehicle cabin. The control of the flow of the coolant via the first outlet (222) and the second outlet (223) controls a temperature of the input coolant.

## Description

### CROSS-REFERENCE TO RELATED APPLICATIONS

This application claims the benefit of U.S. Provisional Application 63/313,507 filed February 24, 2022, and U.S. Non-Provisional Application 17/690,116 filed March 9, 2022.

### BACKGROUND

Exemplary embodiments pertain to the art of vehicle cabin air temperature control and, in particular, to vehicle cabin air temperature control using a pulse width modulated three-way solenoid valve.

In a vehicle cabin, such as the passenger cabin of an aircraft, air temperature, humidity, and pressure are controlled for the safety and comfort of occupants. A cabin air heat exchanger may be used to cool down and recycle air that has been warmed in the vehicle cabin. Specifically, the heated air from the vehicle cabin transfers heat to a coolant. The temperature of the coolant, the flow rate of the coolant, or both may be modulated prior to entering the cabin air heat exchanger.

### BRIEF DESCRIPTION

In one exemplary embodiment, a vehicle cabin air temperature controller includes a two-position three-way solenoid valve with one inlet to take in coolant from a pump, a first outlet to supply a cooling leg, and a second outlet to supply a bypass leg. The vehicle cabin air temperature controller also includes a controller to control flow of the coolant via the first outlet and the second outlet of the solenoid valve, and a cabin air heat exchanger to obtain an input coolant based on the control of the flow via the first outlet and the second outlet and to provide cooled cabin air to the vehicle cabin. The control of the flow of the coolant via the first outlet and the second outlet controls a temperature of the input coolant.

In addition to one or more of the features described herein, the vehicle cabin air temperature controller also includes a cooling heat exchanger coupled to the first outlet of the solenoid valve to cool the coolant that is output via the first outlet of the solenoid valve and to provide cooled coolant to the cooling leg.

In addition to one or more of the features described herein, the vehicle cabin air temperature controller also includes a mixer disposed between the solenoid valve and the cabin air heat exchanger and configured to obtain the cooled coolant via the cooling leg or the coolant via the bypass leg based on the control of the flow via the first outlet and the second outlet and to provide the input coolant to the cabin air heat exchanger.

In addition to one or more of the features described herein, the mixer mixes the cooled coolant obtained via the cooling leg and the coolant obtained via the bypass leg over a predefined period to obtain a mixture and provides the mixture as the input coolant.

In addition to one or more of the features described herein, the cabin air heat exchanger is arranged to obtain warm air from the vehicle cabin and to cool the warm air with the input coolant to provide the cooled cabin air.

In addition to one or more of the features described herein, the vehicle cabin air temperature controller also includes a temperature sensor to measure a temperature of the warm air from the vehicle cabin provided to the cabin air heat exchanger and to provide the temperature of the warm air to the controller as a basis for subsequent control of the first outlet and the second outlet.

In addition to one or more of the features described herein, the controller includes a proportional-integral-derivative (PID) controller and a pulse width modulator to provide a pulse width modulation control signal to the three-way solenoid valve.

In addition to one or more of the features described herein, the pulse width modulation control signal is based on a difference between a desired temperature for the vehicle cabin and the temperature of the warm air.

In addition to one or more of the features described herein, the cabin air heat exchanger obtains warmed air resulting from generating the cooled cabin air and provides the warmed air to the pump.

In addition to one or more of the features described herein, the vehicle cabin is an aircraft cabin.

In another exemplary embodiment, a method of assembling a vehicle cabin air temperature controller includes positioning a two-position three-way solenoid valve with an inlet, a first outlet, and a second outlet to take in coolant from a pump at the inlet, to supply a cooling leg from the first outlet, and to supply a bypass leg from the second outlet. The method also includes configuring a controller to control flow of the coolant via the first outlet and the second outlet of the solenoid valve, and arranging a cabin air heat exchanger to obtain an input coolant based on the control of the flow via the first outlet and the second outlet and to provide cooled cabin air to the vehicle cabin. The control of the flow of the coolant via the first outlet and the second outlet controls a temperature of the input coolant.

In addition to one or more of the features described herein, the method also includes coupling a cooling heat exchanger to the first outlet of the solenoid valve to cool the coolant that is output via the first outlet of the solenoid valve and to provide cooled coolant to the cooling leg.

In addition to one or more of the features described herein, the method also includes disposing a mixer between the solenoid valve and the cabin air heat exchanger to obtain the cooled coolant via the cooling leg or the coolant via the bypass leg based on the control of the flow via the first outlet and the second outlet and to provide the input coolant to the cabin air heat exchanger.

In addition to one or more of the features described herein, the disposing the mixer includes sizing the mixer to mix the cooled coolant obtained via the cooling leg and the coolant obtained via the bypass leg over a predefined period to obtain a mixture and to provide the mixture as the input coolant.

In addition to one or more of the features described herein, the arranging the cabin air heat exchanger includes the cabin air heat exchanger being arranged to obtain warm air from the vehicle cabin and to cool the warm air with the input coolant to provide the cooled cabin air.

In addition to one or more of the features described herein, the method also includes arranging a temperature sensor to measure a temperature of the warm air from the vehicle cabin provided to the cabin air heat exchanger and to provide the temperature of the warm air to the controller as a basis for subsequent control of the first outlet and the second outlet.

In addition to one or more of the features described herein, the configuring the controller includes configuring the controller to include a proportional-integral-derivative (PID) controller and a pulse width modulator to provide a pulse width modulation control signal to the three-way solenoid valve.

In addition to one or more of the features described herein, the pulse width modulation control signal is based on a difference between a desired temperature for the vehicle cabin and the temperature of the warm air.

In addition to one or more of the features described herein, the arranging the cabin air heat exchanger includes the cabin air heat exchanger being arranged to obtain warmed air resulting from generating the cooled cabin air and to provide the warmed air to the pump.

In addition to one or more of the features described herein, the method also includes arranging the vehicle cabin air temperature controller in an aircraft cabin.

### BRIEF DESCRIPTION OF THE DRAWINGS

The following descriptions should not be considered limiting in any way. With reference to the accompanying drawings, like elements are numbered alike:
FIG. 1 illustrates aspects of an aircraft that includes vehicle cabin air temperature control using a pulse width modulated three-way solenoid valve according to one or more embodiments;
FIG. 2 shows a flow diagram for controlling the temperature of the coolant, provided for use in the cabin air heat exchanger, with a pulse width modulated three-way solenoid valve according to one or more embodiments; and
FIG. 3 is a block diagram detailing aspects of the controller according to one or more embodiments.

### DETAILED DESCRIPTION

A detailed description of one or more embodiments of the disclosed apparatus and method are presented herein by way of exemplification and not limitation with reference to the Figures.

Embodiments of the systems and methods detailed herein relate to vehicle cabin air temperature control using a pulse width modulated three-way solenoid valve. As previously noted, a cabin air heat exchanger may be used to cool air for reuse in a vehicle cabin such as an airplane cabin. The temperature of the coolant may be controlled prior to its use in the cabin air heat exchanger. A prior approach to modulating coolant temperature involves the use of a three-way modulating valve (TWMV) to control the fraction of coolant flow provided to a cooling leg, which enters the cabin air heat exchanger, and to a bypass leg that bypasses the cabin air heat exchanger. However, TWMVs are complex and expensive to design and produce. As detailed, the function of controlling the fraction of the coolant flow provided to the cooling leg and the bypass leg is accomplished via pulse width modulation of a two-position, three-way solenoid valve. While an aircraft cabin is specifically shown and discussed for explanatory purposes, the vehicle cabin air temperature control detailed herein may apply to a spacecraft, automobile, or other vehicle cabin or other cooled space.

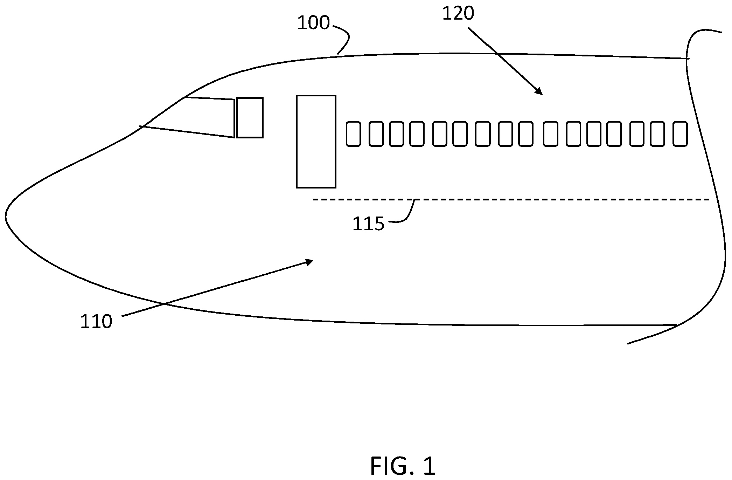

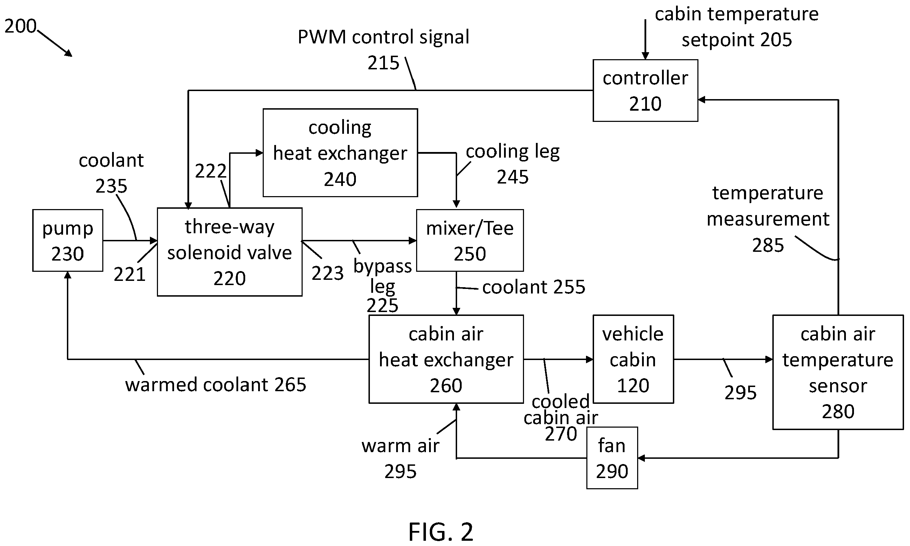

FIG. 1 illustrates aspects of an aircraft 100 that includes vehicle cabin air temperature control using a pulse width modulated three-way solenoid valve 220 (FIG. 2) according to one or more embodiments. The exemplary aircraft 100 includes a cargo compartment 110 and the vehicle cabin 120 (i.e., passenger compartment), separated by a divider 115 that is generally indicated by the dashed line in FIG. 1. While the exemplary vehicle cabin 120 is shown as one level, the vehicle cabin 120 may include multiple levels according to alternate embodiments.

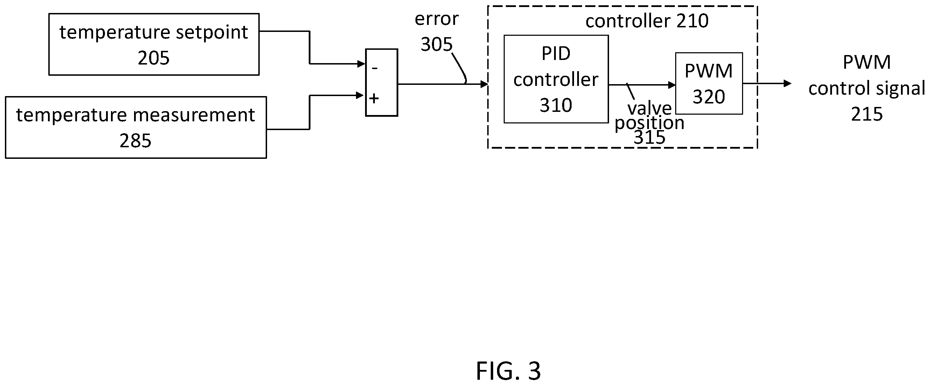

FIG. 2 shows a flow diagram 200 for controlling the temperature of the coolant 255, provided for use in the cabin air heat exchanger 260, with a pulse width modulated three-way solenoid valve 220 according to one or more embodiments. The three-way solenoid valve 220 includes one inlet 221 and two outlets 222, 223, as indicated, and is, therefore, a two-position three-way solenoid valve. Coolant 235 is supplied to the inlet 221 by a pump 230. The three-way solenoid valve 220 is a two-position valve such that all of the output flow is to one of the outlets 222, 223 (i.e., either to the cooling leg 245 or to the bypass leg 225). In the process flow 200 shown in FIG. 2, the flow that is provided to the cooling leg 245 is cooled by a cooling heat exchanger 240. A controller 210 provides a pulse width modulation (PWM) control signal 215 to control which of the two outlets 222, 223 of the three-way solenoid valve 220 (i.e., cooling leg 245 or bypass leg 225) is supplied with the coolant 235 that enters the inlet 221. The controller 210 operation to drive the temperature in the vehicle cabin 120 to the cabin temperature setpoint 205 is detailed with reference to FIG. 3.

As shown, the flow that is provided via the three-way solenoid valve 220 to the cooling leg 245 via outlet 222 is cooled by a cooling heat exchanger 240 while the temperature of the flow that is provided to the bypass leg 225 via outlet 223 is not changed. A mixer/Tee 250 directs the coolant 235 that is supplied to and output from the three-way solenoid valve 220, which is either cooled in the cooling leg 245 or uncooled in the bypass leg 225, to the cabin air heat exchanger 260.

The mixer/Tee 250 may be sized to facilitate mixing of the flow from the cooling leg 245 and the bypass leg 225. In this case, the coolant 255 that is provided to the cabin air heat exchanger 260 has a temperature based on a mix of the temperatures in the cooling leg 245 and the bypass leg 225. The temperature of the coolant 255 provided to the cabin air heat exchanger 260 over a predefined time period is controlled, via control of the three-way solenoid valve 220 by the controller 210, based on how much of the coolant 255 supplied during the predefined period is uncooled (i.e., from the bypass leg 225) and how much of the coolant 255 supplied during the predefined period is cooled (i.e., from the cooling leg 245).

The cabin air heat exchanger 260 receives the coolant 255 from the mixer/Tee 250 and warm air 295, whose temperature has been sensed by the cabin air temperature sensor 280, from the vehicle cabin 120 via a fan 290. The coolant 255 cools the warm air 295 from the vehicle cabin 120 in the cabin air heat exchanger 260. The resulting warmed coolant 265 is provided to the pump 230 to be recirculated to the three-way solenoid valve 220 and the cooled cabin air 270 is provided to the vehicle cabin 120. The temperature measurement 285 obtained by the cabin air temperature sensor 280 provides an estimate of the current air temperature in the vehicle cabin 120 and is provided to the controller 210 as a basis for subsequent control of the three-way solenoid valve 220.

FIG. 3 is a block diagram detailing aspects of the controller 210 according to one or more embodiments. As shown, a difference (i.e., error 305) is obtained between the temperature measurement 285 (i.e., the estimate of the current air temperature in the vehicle cabin 120 sensed by the cabin air temperature sensor 280) and the cabin temperature set point 205. In the controller 210, this difference is provided as an error 305 to a proportional-integral-derivative (PID) controller 310.

The PID controller 310 is a known control loop mechanism that applies a correction to the error 305 based on proportional, integral, and derivative terms and outputs a control variable to minimize the error 305. In this case, the control variable is a valve position 315 between 0 and 1. In the case of the two-position three-way solenoid valve 220, this valve position 315 between 0 and 1 is translated, via pulse width modulator 320 of the controller 210, to a duty cycle (i.e., PWM control signal 215 that indicates the percentage of time that the three-way solenoid valve 220 directs flow to the cooling leg 245 and percentage of time that the three-way solenoid valve 220 directs flow to the bypass leg 225).

The duty cycle indicated by the pulse width modulator 320 must be achieved within a period of time referred to as the PWM period. This PWM period may be predefined or controlled. The PWM period may affect passenger perception of the control of the temperature of the coolant 255 to obtain the desired temperature of the cooled cabin air 270 (i.e., the cabin temperature setpoint 205). For example, for a duty cycle of 50 percent indicated by the pulse width modulator 320, a PWM period of one minute may result in the cooling leg 245 and bypass leg 225 being alternately supplied for 30 seconds each while a PWM period of ten minutes may result in the cooling leg 245 and the bypass leg 225 being alternately supplied for five minutes. This former may be imperceptible to passengers in the vehicle cabin 120 while the later may be noticeable. This PWM period may be predefined or controlled and additionally defined with the PWM control signal 215.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A vehicle cabin air temperature controller comprising:
a two-position three-way solenoid valve (220) with one inlet configured to take in coolant from a pump, a first outlet (222) configured to supply a cooling leg (245), and a second outlet (223) configured to supply a bypass leg (225);
a controller (210) configured to control flow of the coolant via the first outlet (222) and the second outlet (223) of the solenoid valve; and
a cabin air heat exchanger (260) configured to obtain an input coolant based on the control of the flow via the first outlet (222) and the second outlet (223) and to provide cooled cabin air to the vehicle cabin, wherein the control of the flow of the coolant via the first outlet (222) and the second outlet (223) controls a temperature of the input coolant.

2. The vehicle cabin air temperature controller according to claim 1, further comprising a cooling heat exchanger coupled to the first outlet (222) of the solenoid valve to cool the coolant that is output via the first outlet (222) of the solenoid valve and to provide cooled coolant to the cooling leg (245).

3. The vehicle cabin air temperature controller according to claim 2, further comprising a mixer disposed between the solenoid valve (220) and the cabin air heat exchanger (260) and configured to obtain the cooled coolant via the cooling leg (245) or the coolant via the bypass leg (225) based on the control of the flow via the first outlet (222) and the second outlet (223) and to provide the input coolant to the cabin air heat exchanger (260).

4. The vehicle cabin air temperature controller according to claim 3, wherein the mixer is configured to mix the cooled coolant obtained via the cooling leg (245) and the coolant obtained via the bypass leg (225) over a predefined period to obtain a mixture and to provide the mixture as the input coolant.

5. The vehicle cabin air temperature controller according to claim 1, wherein the cabin air heat exchanger is arranged to obtain warm air from the vehicle cabin and to cool the warm air with the input coolant to provide the cooled cabin air.

6. The vehicle cabin air temperature controller according to claim 5, further comprising a temperature sensor (280) configured to measure a temperature of the warm air from the vehicle cabin provided to the cabin air heat exchanger and to provide the temperature of the warm air to the controller (210) as a basis for subsequent control of the first outlet and the second outlet, and preferably wherein the controller (210) includes a proportional-integral-derivative, PID, controller and a pulse width modulator to provide a pulse width modulation control signal to the three-way solenoid valve, and preferably wherein the pulse width modulation control signal is based on a difference between a desired temperature for the vehicle cabin and the temperature of the warm air.

7. The vehicle cabin air temperature controller according to claim 5, wherein the cabin air heat exchanger (260) is also configured to obtain warmed air resulting from generating the cooled cabin air and to provide the warmed air to the pump.

8. The vehicle cabin air temperature controller according to any preceding claim, wherein the vehicle cabin is an aircraft cabin.

9. A method of assembling a vehicle cabin air temperature controller, the method comprising:
positioning a two-position three-way solenoid valve with an inlet, a first outlet, and a second outlet to take in coolant from a pump at the inlet, to supply a cooling leg from the first outlet, and to supply a bypass leg from the second outlet;
configuring a controller to control flow of the coolant via the first outlet and the second outlet of the solenoid valve; and
arranging a cabin air heat exchanger to obtain an input coolant based on the control of the flow via the first outlet and the second outlet and to provide cooled cabin air to the vehicle cabin, wherein the control of the flow of the coolant via the first outlet and the second outlet controls a temperature of the input coolant.

10. The method according to claim 9, further comprising coupling a cooling heat exchanger to the first outlet of the solenoid valve to cool the coolant that is output via the first outlet of the solenoid valve and to provide cooled coolant to the cooling leg.

11. The method according to claim 10, further comprising disposing a mixer between the solenoid valve and the cabin air heat exchanger to obtain the cooled coolant via the cooling leg or the coolant via the bypass leg based on the control of the flow via the first outlet and the second outlet and to provide the input coolant to the cabin air heat exchanger, and preferably wherein the disposing the mixer includes sizing the mixer to mix the cooled coolant obtained via the cooling leg and the coolant obtained via the bypass leg over a predefined period to obtain a mixture and to provide the mixture as the input coolant.

12. The method according to claim 9, wherein the arranging the cabin air heat exchanger includes the cabin air heat exchanger being arranged to obtain warm air from the vehicle cabin and to cool the warm air with the input coolant to provide the cooled cabin air.

13. The method according to claim 12, further comprising arranging a temperature sensor to measure a temperature of the warm air from the vehicle cabin provided to the cabin air heat exchanger and to provide the temperature of the warm air to the controller as a basis for subsequent control of the first outlet and the second outlet, and preferably wherein the configuring the controller includes configuring the controller to include a proportional-integral-derivative (PID) controller and a pulse width modulator to provide a pulse width modulation control signal to the three-way solenoid valve, and preferably wherein the pulse width modulation control signal is based on a difference between a desired temperature for the vehicle cabin and the temperature of the warm air.

14. The method according to claim 12, wherein the arranging the cabin air heat exchanger includes the cabin air heat exchanger being arranged to obtain warmed air resulting from generating the cooled cabin air and to provide the warmed air to the pump.

15. The method according to any of claims 9-14, further comprising arranging the vehicle cabin air temperature controller in an aircraft cabin.
